# EUROPÄISCHE PATENTSCHRIFT

(11) **EP 2 314 497 B1**
(45) Veröffentlichungstag und Bekanntmachung des Hinweises auf die Patenterteilung: **27.08.2014**
(21) Anmeldenummer: 09173761.9
(22) Anmeldetag: 22.10.2009
(51) Int. Cl.: B62B 3/02, B62B 3/10

(54) **Transportwagen für Reinigungsutensilien**
Transport vehicle for cleaning utensils
Wagon de transport pour ustensiles de nettoyage

(43) Veröffentlichungstag der Anmeldung: 27.04.2011
(73) Patentinhaber: VERMOP Salmon GmbH, 82205 Gilching (DE)
(72) Erfinder: Salmon, Dirk, 82205 Gilching (DE)
(74) Vertreter: HOFFMANN EITLE

(56) Entgegenhaltungen:
- EP-A- 1 512 606
- WO-A-95/00062
- WO-A-2004/096004
- DE-A1- 3 021 098
- GB-A- 1 322 404
- US-A- 2 840 384
- US-B1- 7 159 725

## Beschreibung

### Gebiet der Erfindung

Die Erfindung betrifft einen Transportwagen für Reinigungsutensilien mit einer Plattform und einem auf der Plattform befestigten Gestell nach dem Oberbegriff des Anspruchs 1.

### Stand der Technik

Transportwagen für Reinigungsutensilien werden bei der Reinigung großflächiger Objekte eingesetzt und sind in verschiedenen Ausführungsformen bekannt. In der Regel bestehen derartige Transportwägen aus einer Plattform, an der zwei oder vier Räder befestigt sind. Auf der Plattform werden verschiedene vom Reinigungspersonal benötigte Reinigungsutensilien angeordnet, wobei häufig spezielle Halterungen für die für einen jeweiligen Reinigungseinsatz notwendigen Gerätschaften und Utensilien vorgesehen werden.

Aus der EP 0 878 374 A2 ist ein Transportwagen für Reinigungsgegenstände bekannt, mit einer auf vier Rädern getragenen Plattform sowie einem auf der Plattform aufgebauten Gestell, dessen vertikale Stützen aus Vierkantrohr bestehen und in vorgegebene Aufnahmefüße im Transportwagen eingeschoben werden. Die vertikalen Stützen sind über horizontale Traversen miteinander verbunden, an denen getrennte Kopplungselemente vorgesehen sind, die eine schwalbenschwanzförmige Geometrie aufweisen und dem Einschieben der Quertraversen dienen. Der Reinigungswagen kann bei der Inbetriebnahme leicht und komfortabel montiert werden.

Der aus der US 4,869,518 bekannte Transportwagen für Reinigungsutensilien weist zwei Räder an einer Plattform auf, die fest mit einem Gestell verbunden ist, an dem sich Halterungen für Reinigungsutensilien sowie einen Abfallbeutel befinden. Am Gestell befindet sich mindestens eine in vertikaler Richtung verschiebbare Plattform.

Ein besonders variabler, auf spezielle Einsatzzwecke anpassbarer Transportwagen ist aus der EP 1 437 283 A1 bekannt. Hierbei ist die Plattform mit einem Lochraster versehen, um vertikale Stützen eines Gestellaufbaus auf eine variable Weise befestigen zu können. Zudem sind über spezielle, separat vorgesehene Verbindungselemente horizontale Verbindungsstreben und weitere Plattformen höhenverstellbar an den vertikalen Stützen des Gestellaufbaus befestigbar. Dieser Transportwagen bietet bereits eine hohe Variabilität in Bezug auf die Gestaltung des Gestellaufbaus.

Im Reinigungsgewerbe besteht ein zunehmendes Bedürfnis nach Transportwägen, die nicht nur in Bezug auf ihren Gestellaufbau, sondern als Ganzes stärker an Kundenerfordernisse angepasst werden können.

Aus der WO 95/00062 ist ein Nasswischwagen bekannt mit einem fahrbaren Gestell und mindestens einem Eimer, der auf einem fahrbaren Untergestell aufgesetzt ist. Das Untergestell besteht aus lösbaren Einzelteilen nach Art eines Baukastensystems, die für einen Umbau des Gestells, insbesondere für eine Vergrößerung oder Verkleinerung des Nasswischwagens zur Aufnahme eines weiteren Eimers geeignet ist. Das Gestell weist dabei vertikale Stützen auf sowie Eckverbinder, welche Einzelelemente des Untergestells miteinander verbinden. Am Untergestell sind darüber hinaus Lenkrollen angebracht.

Die aus der US 7,159,725 B1 bekannte Vorrichtung zum Halten von Luftballons ist aus einem Gestell aufgebaut, bei dem mit Rollen versehene Eckverbinder über Einzelelemente miteinander verbunden sind. Darüber hinaus sind vier vertikale Stützen vorgesehen, die ihrerseits in einen oberen horizontalen Rahmen münden.

Aus der GB 1 322 404 A ist ein Transportwagen bekannt, der aus Einzelteilen aufgebaut ist. In Form eines Baukastensystems können unterschiedliche Elemente miteinander verbunden werden. An vertikalen Stützen sind Löcher vorgesehen, die der Befestigung von Transportkörben dienen.

Die WO 95/00062 A1 stellt den nächstkommenden Stand der Technik dar.

### Darstellung der Erfindung

Der Erfindung liegt die Aufgabe zugrunde, einen Transportwagen für Reinigungsutensilien zu schaffen, der bei ansprechender Optik variabler auf Kundenwünsche abgestellt werden kann.

Die Aufgabe der Erfindung wird durch die Merkmale des Anspruchs 1 gelöst. Vorteilhafte Ausführungsformen der Erfindung folgen aus den übrigen Ansprüchen.

Der erfindungsgemäße Transportwagen für Reinigungsutensilien umfasst eine aus Einzelelementen zusammengesetzte Plattform und ein auf der Plattform befestigtes Gestell mit mindestens vier vertikalen Stützen sowie Querstreben. Die Plattform umfasst vier Eckelemente, welche Einzelelemente der Plattform sind und an welchen jeweils ein Rad angebracht ist.

Mit anderen Worten wird die Plattform aus mindestens fünf Teilen zusammengesetzt, einem flächigen Grundelement der Plattform sowie vier Eckelementen mit Rädern. Die vier separat vorgesehenen Eckelemente weisen erhebliche Vorteile auf. Zum einen kann die Plattform in Form eines Baukastensystems gestaltet werden und dabei insbesondere je nach Kundenwunsch mit unterschiedlichen Abmessungen hergestellt werden. Die Eckverbinder dienen dazu, im Rahmen dieser Baukastenlösung die aus verschiedenen Elementen zusammengesetzte Plattform zu montieren. Darüber hinaus haben die Eckverbinder aber auch die Funktion, die Räder zu befestigen sowie weitere Funktionen, die bevorzugte Ausführungsformen der Erfindung sind. Der Vorteil des erfindungsgemäßen Transportwagens besteht darin, dass durch die Verwendung der Eckverbinder dieser einfach montiert werden kann. Die Eckverbinder können mit einfachen Steckverbindungselementen versehen sein, so dass keine aufwändigen Fügeverfahren erforderlich sind und z.B. bei der Verwendung einer Plattform aus Metallelementen diese nicht miteinander verschweißt werden müssen. Der weitere Vorteil besteht darin, dass variable Längen und Breiten des Transportwagens realisierbar sind. Anders als im Stand der Technik, wo auf einer vorgegebenen Plattform variable Aufbauten vorgesehen sind, werden somit die gesamten Abmessungen des Transportwagens optimiert. Dies hat Vorteile, wo auf spezielle Raumerfordernisse Rücksicht genommen werden muss, wie z.B. bei Transportwägen für Reinigungsutensilien in Flugzeugen oder Zügen.

Weiterhin sind die vertikalen Stützen Rohre und mindestens eine Querstrebe ist so gestaltet, dass diese vier vertikale Stützen verbindet, wobei die vier vertikalen Stützen jeweils mit einer Mehrzahl von Befestigungslöchern versehen sind und Arretierzapfen der Querstrebe so gestaltet und angeordnet sind, dass sie bei befestigter Querstrebe in alle vier vertikale Stützen eingreifen. Anders als im Stand der Technik, wo zunächst an den vertikalen Stützen gesonderte Befestigungselemente angebracht werden, an die wiederum einzelne Querstreben montiert werden, kann nach der oben beschriebenen, bevorzugten Ausführungsform eine einzige Querstrebe so gestaltet sein, dass diese vier vertikale Stützen verbindet. Die Querstrebe ist als Bauteil bereits mit einer Mehrzahl von Arretierzapfen versehen, wobei deren Anordnung und Gestaltung auf in den vertikalen Stützen angeordnete Befestigungslöcher abgestimmt ist. Ziel dieser Ausführungsform ist es, mit einer einzigen, einstückig vorgesehenen Querstrebe und bevorzugt ohne Zuhilfenahme irgendwelcher zusätzlicher Befestigungselemente vier vertikale Stützen miteinander zu verbinden, wobei die Montage der Querstrebe möglichst ohne Werkzeugeinsatz auch von Laien sicher bewältigt werden kann.

Zur Verwirklichung dieses Vorteils weist die Querstrebe mindestens einen Basisabschnitt und zwei im wesentlichen senkrecht zum Basisabschnitt angeordnete Schenkelabschnitte auf und es sind an mindestens einem der Schenkelabschnitte und/oder dem Basisabschnitt Befestigungsvorsprünge für Zubehörteile vorgesehen. Eine einzelne Querstrebe ist somit so geformt, dass sie bei dem Aufbau bestehend aus Basisabschnitt und zwei im wesentlichen senkrecht zum Basisabschnitt angeordneten Schenkelabschnitten eine U-Form aufweist, mit der sich alle vier vertikalen Stützen verbinden lassen. Zusätzlich sind an der Querstrebe Befestigungsvorsprünge für Zubehörteile vorgesehen. Auf diese Weise kann durch das Vorsehen eines einzelnen, einstückigen Elements nicht nur die Stabilität des Gestells durch das Verbinden der vertikalen Stützen, sondern auch durch das Vorsehen einer Mehrzahl von Befestigungslöchern in den vertikalen Stützen eine variable und sich an den Kundenwünschen orientierende Anbringung der Querstrebe verwirklicht werden. Zusätzlich können Zubehörteile an der Querstrebe angebracht werden. In diesem Zusammenhang hat es sich als vorteilhaft erwiesen, die Befestigungsvorsprünge als langgestreckte Einhängelaschen zu gestalten, so dass auch in Bezug auf die genaue Anordnung einzelner Zubehörteile eine möglichst große Variabilität gegeben ist.

Nach einer bevorzugten Ausführungsform der Erfindung weist mindestens ein Eckverbinder eine Aufnahme zur Befestigung einer vertikalen Stütze des Gestells auf. Hierin besteht eine weitere Funktion der Eckverbinder neben der Befestigung eines Rades sowie der Herstellung einer nach Kundenwünschen dimensionierten Plattform im Baukastenverfahren.

Nach einer bevorzugten Ausführungsform der Erfindung sind die Eckverbinder aus Kunststoff. Durch die Verwendung von Kunststoff können die beim Vorsehen verschiedener Funktionen komplex geformten Eckverbinder auf eine einfache Weise hergestellt werden, indem thermoplastischer Kunststoff verwendet wird und herkömmliche Formverfahren, wie Spritzgießen eingesetzt werden. Ein weiterer Vorteil des Vorsehens von Eckverbindern aus Kunststoff besteht darin, dass Kunststoff, je nach Materialwahl, beim unerwünschten Kontakt mit Wänden oder anderen Raumbegrenzungen keine Abriebspuren hinterlässt.

Nach einer bevorzugten Ausführungsform der Erfindung weisen die Eckverbinder weiterhin einen Stoßschutz aus elastischem Material auf. Hierin besteht eine wieder weitere Funktion, die in die Eckverbinder integriert werden kann. Indem eine geeignete Anbringegeometrie, z.B. zum einfachen Einklipsen, zur Befestigung eines elastischen Stoßschutzmaterials vorgesehen ist, kann der Gefahr einer Beschädigung des zu reinigenden Objekts bei ungeschultem Reinigungspersonal entgegengewirkt werden. Wird unbeabsichtigt mit dem Transportwagen gegen eine Wand oder Kante des Raums oder eines Gegenstands gestoßen, so wird der Stoß im Wesentlichen durch den Stoßschutz aus elastischem Material aufgefangen, so dass je nach Dimensionierung des Stoßschutzes und der Materialwahl im Bereich einer üblichen Handhabung keine Schäden auftreten.

Nach einer bevorzugten Ausführungsform der Erfindung weisen die vom Basisabschnitt entfernten Enden der Schenkelabschnitte jeweils einen ersten Arretierzapfen auf, der sich im wesentlichen senkrecht zur Längserstreckung der Schenkelabschnitte erstreckt. Zusätzlich sind in den Verbindungsbereichen zwischen Basisabschnitt und Schenkelabschnitten jeweils mindestens ein zweiter Arretierzapfen angeordnet, wobei sich die Arretierzapfen senkrecht zur Längserstreckung des Basisabschnitts erstrecken. Die ersten Arretierzapfen und zweiten Arretierzapfen sind somit jeweils in einer horizontalen Ebene, aber senkrecht zueinander angeordnet. In diesem Zusammenhang sollte erwähnt werden, dass sich Bezugnahme auf horizontale und vertikale Erstreckungen jeweils darauf beziehen, dass der erfindungsgemäße Transportwagen auf einem horizontalen Untergrund steht. Durch diese Anordnung der ersten und zweiten Arretierzapfen kann eine Querstrebe einfach montiert werden, indem zunächst die zweiten Arretierzapfen in den Verbindungsbereichen zwischen Basisabschnitt und Schenkelabschnitten in die entsprechenden vertikalen Stützen eingeschoben werden und anschließend die ersten Arretierzapfen in die verbleibenden zwei vertikalen Stützen eingeschoben werden. Hierzu ist es vorteilhaft, die Querstreben aus einem ausreichend elastischen Material zu fertigen, so dass die vom Basisabschnitt entfernten Enden der Schenkelabschnitte elastisch verbogen werden können, was sich mit Rückgriff auf die bereits oben beschriebene U-Form dahingehend visualisieren lässt, dass die nach oben weisenden Enden des U's nach außen oder nach innen verbogen werden können. Auf diese Weise können die ersten Arretierzapfen, die sich im wesentlichen senkrecht zur Längserstreckung der Schenkelabschnitte erstrecken, abschließend ebenfalls in den zugehörigen vertikalen Stützen eingeschoben werden.

Nach einer bevorzugten Ausführungsform der Erfindung umfasst der Transportwagen weiterhin rohrförmige Ansätze an den vom Basisabschnitt entfernten Enden beider Schenkelabschnitte, wobei die rohrförmigen Ansätze zum vertikalen Einschieben von Schwenkzapfen eines Zubehörteils geeignet sind.

Vorzugsweise weist der Transportwagen weiterhin eine Verkleidung aus einem Folienmaterial oder plattenförmigen Material auf, die zwischen mehreren der vier Stützen befestigbar ist und einen Stauraum zwischen den vier Stützen begrenzt. Diese Maßnahme dient zum einen dazu, einen Stauraum zu schaffen, in den unverlierbar vom Reinigungspersonal benötige Utensilien aufbewahrt werden können. Darüber hinaus dient die Verkleidung aber auch dazu, das optische Erscheinungsbild des Transportwagens zu verbessern. Auch ist es möglich, die Verkleidung dahingehend zu verwenden, dass diese Fläche zum Aufbringen von Werbung verwendet wird oder aber durch die spezielle Farbgebung oder Beschriftung der Verkleidung der Reinigungswagen einen bestimmten Reinigungsbetrieb oder einer Einheit innerhalb des Betriebs zugeordnet werden kann.

Vorzugsweise weist der Transportwagen einen Deckel auf, der das Gestell auf der der Plattform entgegengesetzten Seite abschließt und über einen Verschwenkmechanismus von einer geschlossenen Position in eine geöffnete Position bewegbar ist. Wird dieser Deckel in Zusammenhang mit der oben beschriebenen Verkleidung verwendet, so lässt sich bei Vorsehen einer geschlossenen Plattform ein vollständig geschlossener Stauraum erzeugen.

Nach einer bevorzugten Ausführungsform der Erfindung sind Zubehörteile am Gestell befestigbar, wobei die Zubehörteile eine oder mehrere Elemente aus der Gruppe bestehend aus Eimern, Staufächer, Aufnahmeelementen für Wischbezugshalter, Befestigungselementen für rohrförmige Stiele und Klemmrahmen für Kunststoffsäcke umfassen. Die obige Liste soll bereits deutlich machen, dass unterschiedliche Zubehörteile einzeln oder in größerer Anzahl in beliebiger Kombination miteinander verwendet werden können. Wenn an der Querstrebe geeignete Befestigungsvorsprünge, z.B. langgestreckte Einhängelaschen vorgesehen sind, so ist lediglich darauf zu achten, dass die unterschiedlichen Zubehörteile eine entsprechend geformte Geometrie aufweisen, um an den Querstreben angebracht zu werden. Weiterhin ist es aber auch möglich, ein Zubehörteil mit Schwenkzapfen zu versehen und dieses in die vorzugsweise vorgesehenen rohrförmigen Ansätze an den vom Basisabschnitt entfernten Enden beider Schenkelabschnitte einer Querstrebe einzusetzen.

Nach einer bevorzugten Ausführungsform der Erfindung ist eine Handpresse für Wischbezüge mit integriertem Auffangbehälter für Flüssigkeit am Gestell befestigbar. Dies setzt voraus, dass aufgrund der beim Auspressen von Wischbezügen erforderlichen Aufwendung von Kraft eine ausreichend hohe Stabilität des Gestells vorgesehen ist.

Nach einer bevorzugten Ausführungsform der Erfindung ist am Gestell ein abschließbares Aufbewahrungselement befestigbar. Es hat sich gezeigt, dass aggressive Reinigungsmedien vor einem unbefugten Zugriff geschützt werden müssen. Diese Problematik tritt in Kindergärten, Kinderkliniken, Altenheimen und psychiatrischen Stationen von Krankenhäusern auf, in denen in der Vergangenheit immer wieder unbefugte Personen aggressive Reinigungsflüssigkeiten unerlaubt an sich genommen haben.

Nach einer bevorzugten Ausführungsform der Erfindung umfasst das abschließbare Aufbewahrungselement mindestens ein schwenkbares Türelement, in dessen geöffneter Position die Bedienperson Zugang zu Staufächern besitzt, die im Inneren des abschließbaren Aufbewahrungselements oder an der Innenseite der mindestens einen Tür angeordnet sind. Derartige Staufächer, die in der Innenseite der mindestens einen Tür angeordnet sind, kann man sich wie in gängigen Kühlschranktüren vorstellen, die ebenfalls in geöffneter Position Zugriff auf in Staufächern abgelegte Gegenstände erlauben. Alternativ kann aber auch das abschließbare Aufbewahrungselement ein komplettes, schrankähnliches Element sein, das alternativ zu Staufächern an der Innenseite der mindestens einen Tür oder aber auch ergänzend hierzu Staufächer im Bereich eines Korpuselements aufweist.

### Kurze Beschreibung der Figuren

In den nachfolgenden Zeichnungen wird die Erfindung rein beispielhaft beschrieben. Dabei zeigen
- Fig. 1: den Grundaufbau des erfindungsgemäßen Transportwagens;
- Fig. 2: eine Ausführungsform einer Querstrebe zur Verwendung in dem Transportwagen nach Fig. 1;
- Fig. 3: einen Transportwagen nach Fig. 1 mit zwei Zubehörteilen;
- Fig. 4: einen Transportwagen nach Fig. 1 mit einer Verkleidung des Gestellaufbaus und weiteren alternativen Zubehörteilen;
- Fig. 5: einen Transportwagen nach Fig. 1 mit einer Verkleidung des Gestellaufbaus und weiteren alternativen Zubehörteilen;
- Fig. 6: eine Zubehörwagen nach Fig. 5 mit einer daran angebrachten Presse für Wischbezüge; und
- Fig. 7: einen erfindungemäßen Transportwagen mit weiteren daran befestigten Zubehörteilen.

Wege zur Ausführung der erfindungsgemäßen

In den nachfolgenden Figuren werden jeweils dieselben Bauelemente mit denselben Referenzziffern bezeichnet.

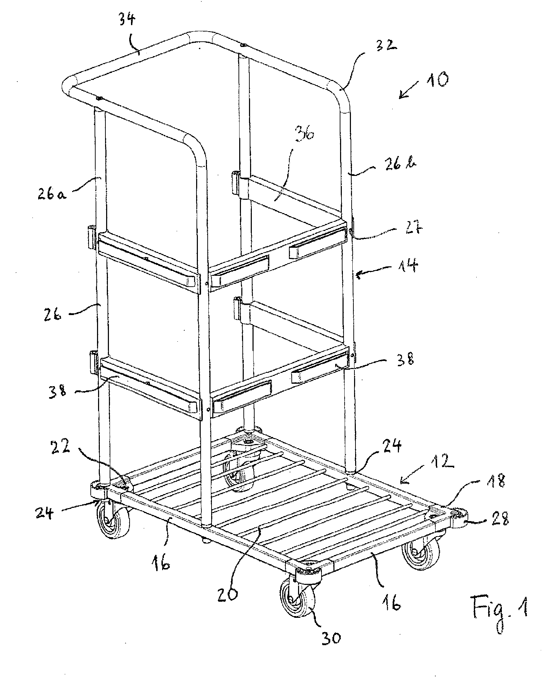

Der in Fig. 1 dargestellte Transportwagen 10 umfasst eine aus Einzelelementen zusammengesetzte Plattform 12 sowie ein ebenfalls aus Einzelelementen zusammengesetztes Gestell 14. Die Plattform 12 kann herstellerseitig entsprechend spezifischen Kundenwünschen dimensioniert werden, wobei sowohl die Länge wie auch die Breite des Transportwagens über eine entsprechende Anpassung der Plattform 12 einstellbar ist. Die Plattform 12 besteht im wesentlichen aus Rahmenleisten 16, die über Viereckverbinder 18 zu einem rechteckigen Rahmen verbunden werden. Im Ausführungsbeispiel nach den Fig. 1 bis 7 sind die Rahmenleisten zudem über Stäbe 20 miteinander verbunden, wodurch die Plattform 12 wie eine Rostauflage gestaltet ist. Anstelle der Stäbe 20 ist es aber in gleicher Weise möglich, auf geeignete Auflageansätze 22 der Plattform eine biegesteife Bodenplatte aufzulegen und auf die Stäbe 20 zu verzichten. Es ist zu beachten, dass bei einer Anpassung der Gesamtabmessungen des Transportwagens in Bezug auf dessen Breite auch die Länge der einzelnen Stäbe 20 entsprechend angepasst werden muss, was jedoch bei abgestuften, angebotenen Breiten des Transportwagens kein Problem darstellt. Die Rahmenleisten 16 und Stäbe 20 bestehen vorzugsweise aus Metall.

Die Eckverbinder 18 sind vorzugsweise aus Kunststoff und können auf eine einfache Weise mit den Rahmenleisten 16 zusammengesteckt werden, indem die Rahmenleisten 16 einen inneren Hohlraum aufweisen, in den Verbindungsansätze der Eckverbinder 18 eingeschoben werden.

Die Eckverbinder 18 können mit einer geeigneten Aufnahmegeometrie 24 zur Befestigung einer vertikalen Stütze 26 des Gestells 14 versehen sein. Die Aufnahmegeometrie kann dabei auf unterschiedliche Weise gestaltet sein. Im einfachsten Falle ist im Eckverbinder 18 lediglich eine entsprechend dimensionierte Öffnung vorgesehen, in welche ein Endstück der vertikalen Stütze 26 mit verringertem Außendurchmesser eingesteckt werden kann, wobei der Absatz in der vertikalen Stütze zum verringerten Querschnitt hin als Anschlagfläche dient. Alternativ kann aber auch eine Aufnahmehülse, z.B. aus Metall, in dem Eckverbinder vorgesehen sein, welche das untere Ende der zugehörigen vertikalen Stütze aufnimmt.

Die Eckverbinder können weiterhin mit einem Stoßschutz 28 versehen sein, der vorzugsweise aus elastischem Kunststoff besteht und zudem dahingehend ausgewählt ist, dass er beim unbeabsichtigten Anstoßen oder Entlangstreifen an einer Wand oder einem anderen Gegenstand keine Spuren durch Abrieb hinterlässt.

Eine weitere Funktion der Eckverbinder 18 besteht darin, die Räder 30 zu befestigen. Um den erfindungsgemäßen Transportwagen möglichst wendig und leicht manövrierbar zu machen, sind die Räder 30 vorzugsweise um eine vertikale Achse schwenkbar.

An den in Längsrichtung des Transportwagens verlaufenden Rahmenleisten 16 sind ebenfalls geeignete Aufnahmegeometrien 24 für vertikale Stützen 26 des Gestells vorgesehen.

Das in Fig. 1 dargestellte Gestell 14 besteht vorzugsweise aus einem Rohrrahmen, wobei im Bereich der Eckverbinder auf einer Stirnseite der Plattform zwei gerade vertikale Stützen 26a vorgesehen sind und die beiden weiteren vertikalen Stützen 26b über einen geeigneten Bogenverbinder 32 mit einem horizontalen Griffelement 44 verbunden sind, das gleichzeitig an den vertikalen Stützen 26a befestigt ist und somit die vier vertikalen Stützen miteinander verbindet, einen horizontalen, oberseitigen Abschluss bildet und gleichzeitig einen Griff zum Führen des Transportwagens durch eine Bedienperson beinhaltet.

Zur weiteren Stabilisierung des Gestells 14 und zur Anbringung von Zubehörteilen sind weiterhin Querstreben 36 vorgesehen, die in vorgegebenen Höhenabstufungen an den vertikalen Stützen befestigbar sind und mit Einhängelaschen 38 versehen sind, die der Befestigung von Zubehörteilen dienen. Die Gesamtabmessungen der Querstreben, die vorzugsweise einstückig aus Kunststoff hergestellt sind, sind bei einer Änderung der Abmessungen der Plattform 12 und entsprechend des Gestells 14 ebenfalls anzupassen.

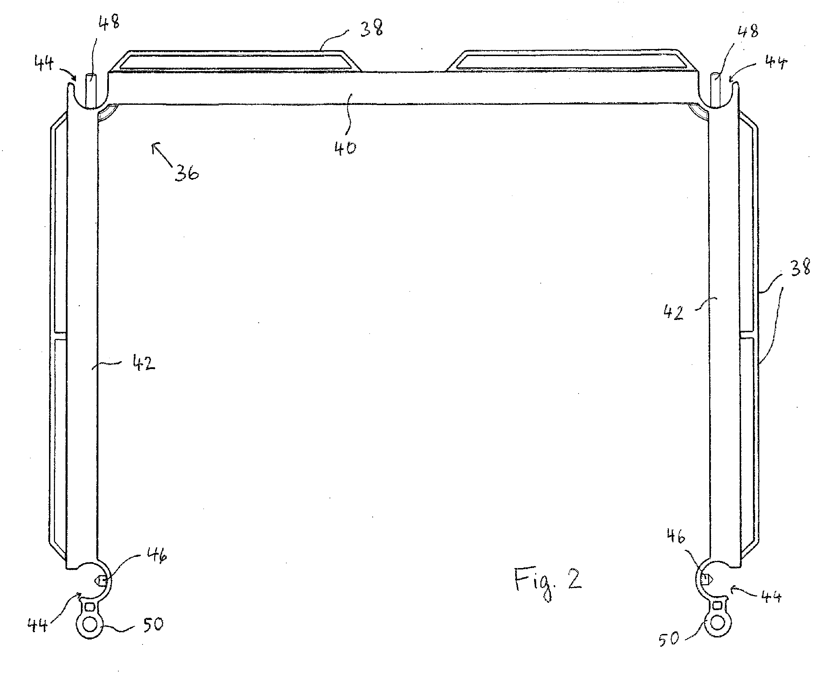

Fig. 2 zeigt eine Querstrebe, wie sie in dem Gestell nach Fig. 1 vorgesehen ist. Die Querstrebe 36 ist im wesentlichen U-förmig gestaltet und weist einen Basisabschnitt 40 sowie zwei Schenkelabschnitte 42 auf. Im Verbindungsbereich zwischen dem Basisabschnitt 40 und beiden Schenkelabschnitten 42 sowie an den von dem Basisabschnitt 40 entfernten Enden beider Schenkelabschnitte 42 sind jeweils Rohraufnahmen 44 vorgesehen, welche an die Außenabmessungen der vertikalen Stützen 26 des Gestells 14 angepasst sind und der Befestigung der Querstrebe 36 an den vertikalen Stützen 26 dienen.

Um die Querstrebe 36 auf eine möglichst einfache Weise an den vertikalen Stützen 26 eines Gestells anbringen zu können, aber auch um diese bei Bedarf leicht wieder von den vertikalen Stützen 26 lösen und in einer anderen gewünschten Höhe befestigen zu können, sind im Bereich der Rohraufnahmen 44 Arretierzapfen vorgesehen. Erste Arretierzapfen 46 sind dabei an denjenigen Rohraufnahmen 44 vorgesehen, die sich an den vom Basisabschnitt 40 entfernten Enden der Schenkelabschnitte 42 befinden. Diese ersten Arretierzapfen 46 erstrecken sich im wesentlichen senkrecht zur Längserstreckung der Schenkelabschnitte 42. Zweite Arretierzapfen 48 sind im Verbindungsbereich zwischen Basisabschnitt 40 und Schenkelabschnitten 42 vorgesehen und erstrecken sich im wesentlichen senkrecht zur Längserstreckung des Basisabschnitts 40. Auf diese Weise lässt sich die Querstrebe 36 leicht an den vier vertikalen Stützen 26 montieren, indem zunächst die zweiten Arretierzapfen 48 in geeignete Aufnahmeöffnungen 27 der ersten beiden vertikalen Stützen eingesteckt werden und daraufhin die vom Basisabschnitt 40 entfernten Enden der Schenkelabschnitte elastisch aufeinander zugebogen werden, bis die ersten Arretierzapfen 46 in entsprechende Öffnungen 27 an den verbleibenden zwei vertikalen Stützen in Eingriff gebracht werden. Durch die Längserstreckung der ersten und zweiten Arretierzapfen senkrecht zueinander wird vermieden, dass die Querstrebe 36 sich unbeabsichtigt von den vertikalen Stützen 26 lösen kann. Zum gezielten, aber leicht durchzuführenden Lösen der Querstrebe 36 von den vier vertikalen Stützen 26 sind Bewegungen in unterschiedlichen Richtungen auszuführen, wodurch ein unbeabsichtigtes oder selbsttätiges Lösen vermieden wird.

Die in Fig. 2 dargestellte Querstrebe 36 weist zudem an den vom Basisabschnitt 40 entfernten Enden der Schenkelabschnitte 42 jeweils einen rohrförmigen Ansatz 50 auf, der ebenfalls einstückig mit der Querstrebe 36 gestaltet sein kann und in Montageposition gemeinsam mit einem entsprechend geformten Zapfen eines Zubehörteils dieses schwenkbar an der Querstrebe befestigt.

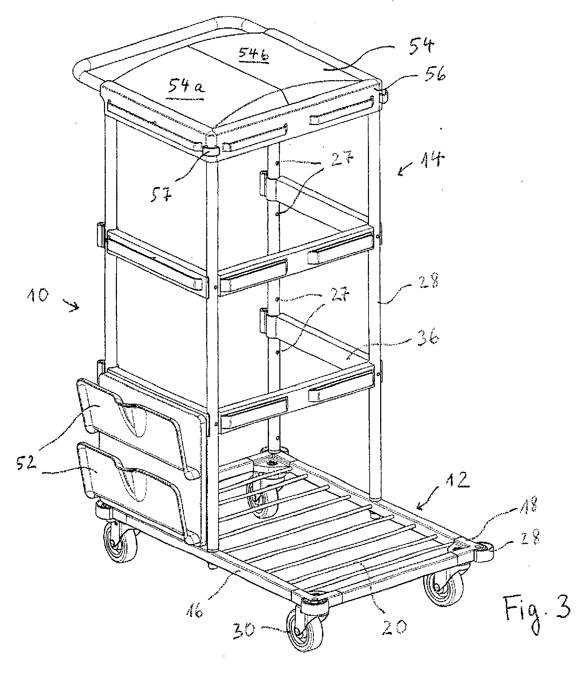

In den nachfolgenden Fig. 3 bis 7 werden unterschiedliche Zubehörteile beschrieben, die an den Transportwagen 10 nach Fig. 1 befestigbar sind. Fig. 3 zeigt hierbei zwei Aufnahmen für Mophalter 52, die es einer Bedienperson ermöglichen, Mophalter für unterschiedliche Anwendungszwecke, z.B. zum Feuchtwischen und Trockenwischen auf eine einfache und zeitsparende Weise am Transportwagen zu befestigen. Dies kann entweder mit einem jeweils am Mophalter angebrachten Stiel erfolgen, oder aber es können auch lediglich die Mophalter in die Aufnahmen eingeschoben werden und ein gemeinsamer Stiel für mehrere verwendete Reinigungsgeräte eingesetzt werden. Der Stiel kann an den Befestigungselementen 57 befestigt werden.

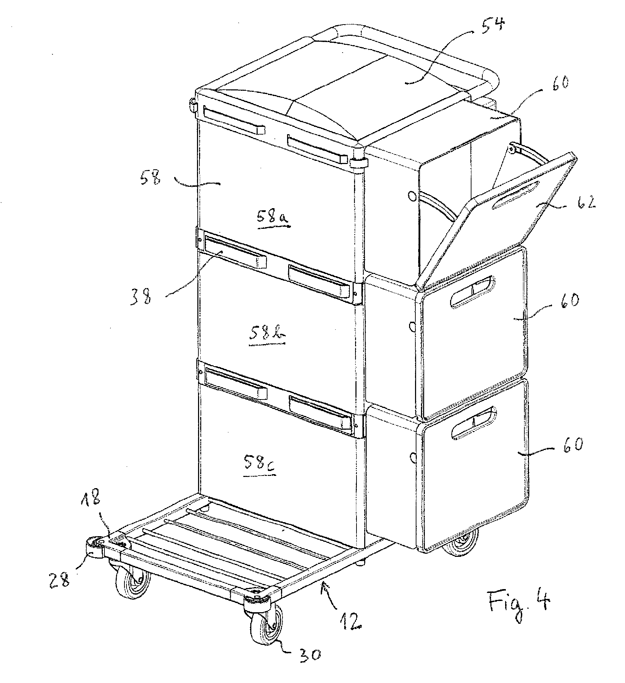

Die Darstellung in Fig. 3 zeigt zudem einen Deckel 54, der das Gestell 14 auf der der Plattform 12 entgegengesetzten Seite, d.h. auf der Oberseite, abschließt. Der in Fig. 3 dargestellte Deckel weist dabei eine erste und eine zweite Deckelklappe 54a und 54b auf, die jeweils verschwenkbar an der oberseitigen Abschlussstrebe 54 befestigt ist. Der Anwendungszweck des Deckels 54 ergibt sich dabei aus der Fig. 4, die zeigt, dass der zwischen den vier vertikalen Stützen befindliche Raum durch eine Verkleidung abgeschlossen werden kann. Die Verkleidung 58 besteht aus einzelnen Elementen, die als Verkleidungsplatten 58a, 58b, 58c oder aber aus Folienmaterial gebildet sein können. Über das Vorsehen von Verkleidungsplatten, die an den vertikalen Stützen 26 befestigbar sind, lässt sich ein seitlich und, im Falle des Vorsehens eines Deckels 54, auch oben geschlossener Raum zwischen den vier vertikalen Stützen schaffen. Die Verkleidung kann dabei zum einen dazu dienen, das optische Erscheinungsbild des Transportwagens zu verbessern und auch als Werbeträger zu dienen. Darüber hinaus besitzt die Verkleidung auch den Vorteil, dass ein ausreichend großer Stauraum zur Aufbewahrung von Reinigungsutensilien geschaffen wird.

In Fig. 4 ist darüber hinaus ein mögliches Zubehörteil dargestellt, das in Form von einem oder mehreren Anbaukästen 60 vorgesehen ist, wobei im Ausführungsbeispiel nach Fig. 4 die drei Anbaukästen eine Öffnungsklappe 62 besitzen, die um eine horizontale, unten am Anbaukasten 60 vorgesehene Schwenkachse von einer geschlossenen in eine geöffnete Position bewegt werden kann.

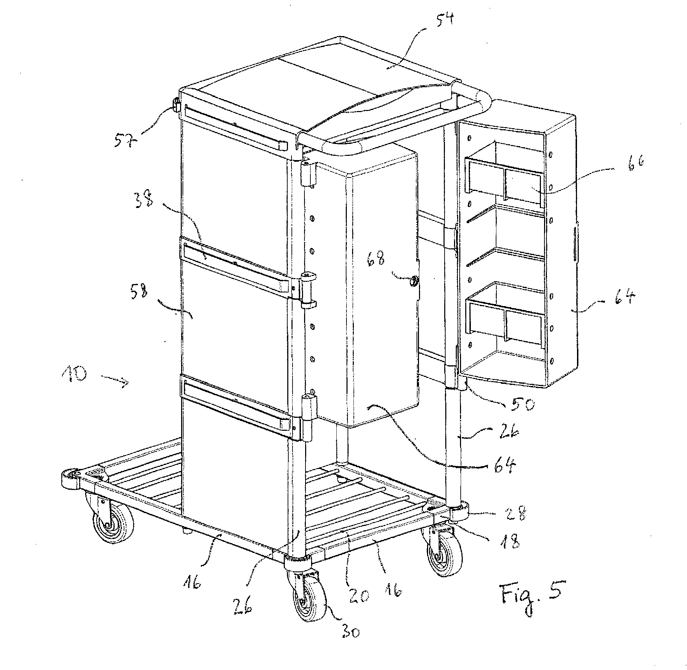

In der Ausführungsform nach Fig. 5 ist eine Verkleidung 58 nur auf drei der möglichen vier Seiten zwischen den vier vertikalen Stützen 26 vorgesehen und eine Seite im wesentlichen durch ein Aufbewahrungselement 64 geschlossen, das über horizontale Schwenkscharniere in die in Fig. 2 beschriebenen rohrförmigen Ansätze 50 der Querstreben 36 einsetzbar sind. Das Aufbewahrungselement 64 weist zwei Schwenktüren auf, die eine zum Hohlraum zwischen den vier vertikalen Stützen hin gerichtete, offenen Kastenform aufweisen. Im Bereich dieser offenen Kastenform sind höhenverstellbar Schubladen, Körbe oder ähnliche Aufnahmeelemente 66 vorgesehen, die insbesondere der Lagerung von Reinigungsmitteln dienen. Das Aufbewahrungselement 64 ist vorzugsweise mit einem Absperrschloss 68 versehen, um die im Aufbewahrungselement 64 befindlichen Gegenstände gegen unerlaubte Entnahme zu sichern. Gerade aggressive Reinigungsmedien können so in Kindergärten, Altenheimen oder Krankenhäusern vor unbefugtem Zugriff geschützt werden.

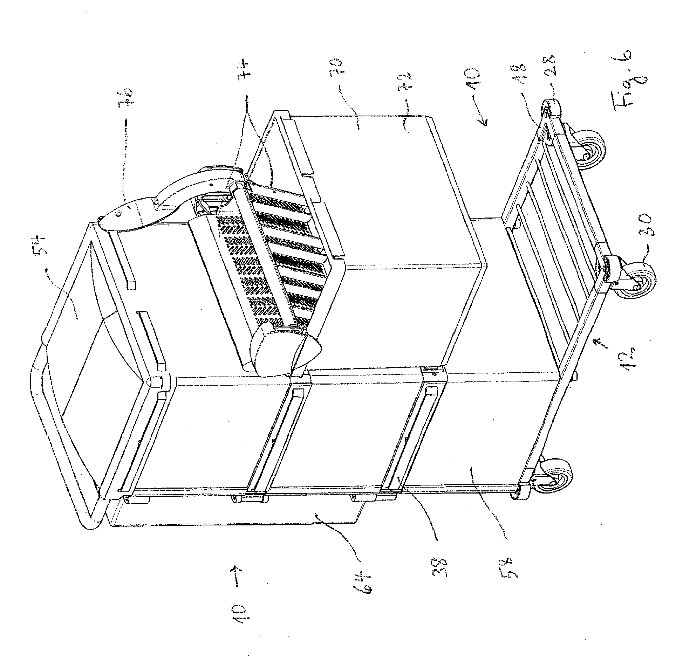

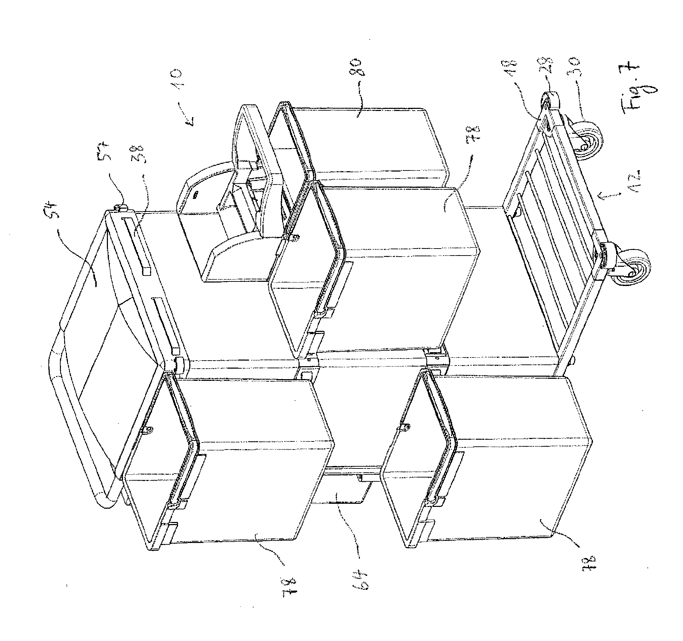

Fig. 6 zeigt den Transportwagen 10 nach Fig. 5. jedoch mit einer zusätzlich am Transportwagen befestigten Moppresse 70, die aus einem Auffanggefäß 72, Pressbacken 44 sowie einem Betätigungshebel 76 besteht. Die Moppresse 70 wie auch die in Fig. 7 dargestellten, weiteren möglichen Zubehörteile sollen dabei lediglich verdeutlichen, dass viele unterschiedliche Zubehörteile an den Einhängelaschen 38 der Querstreben 36 befestigt werden können, um den Transportwagen 10 somit möglichst variabel gestalten zu können. Im Beispiel der Fig. 7 sind dies Aufnahmebehälter 78, die entweder als Putzeimer der Aufnahme von Flüssigkeit, oder aber auch im Rahmen einer sortengerechten Mülltrennung der Aufnahme unterschiedlicher Abfalltypen dienen kann. In Fig. 7 ist auch ein weiteres Modell einer Presse 80 für Wischbezüge dargestellt, die im Unterschied zu der Moppresse 70 nach Fig. 6 nicht der Aufnahme eines Mophalters mit darauf befestigtem Mopbezug, sondern lediglich dem Auspressen von Wischbezügen dient.

Auch der Deckel 54, der bislang nur als oberer Abschluss eines zwischen den vertikalen Stützen befindlichen Hohlraums dargestellt wurde, kann mit einer unterschiedlichen Funktionalität versehen sein und dazu dienen, einen im Innenraum zwischen den vier vertikalen Stützen anzuordnenden Müllsack oberseitig festzuklemmen.

Der erfindungsgemäße Transportwagen ist sowohl aufgrund der variablen Dimensionierung und Montagemöglichkeiten der Plattform, als auch aufgrund der variablen Bestückung mit kundenspezifischen Anbauteilen besonders vielseitig einsetzbar und dabei nur aus wenigen Einzelteilen aufgebaut, so dass dieser leicht montierbar ist. Weiterhin ist der Transportwagen aufgrund der bequemen Anbringung einer Vielzahl unterschiedlicher Zubehörteile sowohl in Bezug auf Kundenwünsche konfektionierbar, als auch durch die individuellen Benutzer bequem an deren spezielle Bedürfnisse anpassbar.

## Patentansprüche

1. Transportwagen für Reinigungsutensilien umfassend:
- eine aus Einzelelementen zusammengesetzte Plattform (12); und
- ein Gestell (14) mit mindestens vier vertikalen Stützen (26) und Querstreben (36), das auf der Plattform (12) befestigt ist; wobei
- die Plattform (12) vier Eckverbinder (18) umfasst, welche Einzelelemente der Plattform (12) sind und an welchen jeweils ein Rad (30) angebracht ist;
**dadurch gekennzeichnet, dass**
- die vertikalen Stützen (26) Rohre sind und mindestens eine Querstrebe (36) so gestaltet ist, dass die Querstrebe (36) vier vertikale Stützen (26) verbindet, wobei die vier vertikalen Stützen (26) jeweils mit einer Mehrzahl von Befestigungslöchern (27) versehen sind und Arretierzapfen (46, 48) der Querstrebe (36) so gestaltet und angeordnet sind, dass sie bei befestigter Querstrebe (36) in alle vier vertikalen Stützen (26) eingreifen; und
- die mindestens eine Querstrebe (36) einen Basisabschnitt (40) und zwei im wesentlichen senkrecht zum Basisabschnitt angeordnete Schenkelabschnitte (42) aufweist und an mindestens einem der Schenkelabschnitte (42) und/oder dem Basisabschnitt (40) Befestigungsvorsprünge (38) für Zubehörteile vorgesehen sind.

2. Transportwagen nach Anspruch 1,
**dadurch gekennzeichnet, dass**
mindestens ein Eckverbinder (18) eine Aufnahme (24) zur Befestigung einer vertikalen Stütze (26) aufweist.

3. Transportwagen nach Anspruch 1 oder Anspruch 2,
**dadurch gekennzeichnet, dass**
die Eckverbinder (18) aus Kunststoff bestehen.

4. Transportwagen nach einem der vorhergehenden Ansprüche,
**dadurch gekennzeichnet, dass**
die Eckverbinder (18) weiterhin einen Stoßschutz (28) aus elastischem Material aufweisen.

5. Transportwagen nach einem der vorhergehenden Ansprüche,
**dadurch gekennzeichnet, dass**
die Befestigungsvorsprünge langgestreckte Einhängelaschen (38) sind.

6. Transportwagen nach einem der vorhergehenden Ansprüche,
**dadurch gekennzeichnet, dass**
die vom Basisabschnitt (40) entfernten Enden der Schenkelabschnitte (42) jeweils einen ersten Arretierzapfen (46) aufweisen, der sich im wesentlichen senkrecht zur Längserstreckung der Schenkelabschnitte (42) erstreckt; und in den Verbindungsbereichen zwischen Basisabschnitt (40) und Schenkelabschnitten (42) zweite Arretierzapfen (48) angeordnet sind, die sich im wesentlichen senkrecht zur Längserstreckung des Basisabschnitts (40) erstrecken.

7. Transportwagen nach einem der vorhergehenden Ansprüche, weiter umfassend rohrförmige Ansätze (50) an den vom Basisabschnitt (40) entfernten Enden beider Schenkelabschnitte (42), wobei die rohrförmigen Ansätze (50) zum vertikalen Einschieben von Schwenkzapfen eines Zubehörteils geeignet sind.

8. Transportwagen nach einem der vorhergehenden Ansprüche, weiter umfassend eine Verkleidung (58) aus einem Folienmaterial oder plattenförmigem Material (58a, 58b, 58c), die zwischen mindestens zwei der vier vertikalen Stützen (26) befestigbar ist und einen Stauraum zwischen den vertikalen Stützen (26) ein- oder mehrseitig begrenzt.

9. Transportwagen nach einem der vorhergehenden Ansprüche, weiter umfassend einen Deckel (54; 54a, 54b), der das Gestell (14) auf der der Plattform (12) entgegengesetzten Seite abschließt und über einen Verschwenkmechanismus von einer geschlossenen Position in eine geöffnete Position bewegbar ist.

10. Transportwagen nach einem der vorhergehenden Ansprüche,
**dadurch gekennzeichnet, dass**
Zubehörteile am Gestell befestigbar sind, wobei die Zubehörteile an eines oder mehrere Elemente aus der Gruppe bestehend aus Eimern (78), Staufächern (60, 64), Aufnahmeelemente (52) für Wischbezugshalter, Befestigungselemente (57) für rohrförmige Stiele und Klemmrahmen für Kunststoffsäcke umfassen.

11. Transportwagen nach einem der vorhergehenden Ansprüche,
**dadurch gekennzeichnet, dass**
eine Handpresse (70; 80) für Wischbezüge mit integriertem Auffangbehälter für Flüssigkeiten am Gestell befestigbar ist.

12. Transportwagen nach einem der vorhergehenden Ansprüche,
**dadurch gekennzeichnet, dass**
ein abschließbares Aufbewahrungselement (64) am Gestell (14) befestigbar ist.

13. Transportwagen nach Anspruch 12,
**dadurch gekennzeichnet, dass**
das abschließbare Aufbewahrungselement (64) mindestens ein schwenkbares Türelement umfasst, in dessen geöffneter Position die Bedienperson Zugang zu Staufächern (66) besitzt, die im Inneren des abschließbaren Aufbewahrungselements (64) oder an der Innenseite der mindestens einen Tür angeordnet ist.

## Claims

1. Trolley for cleaning utensils comprising:
- a platform (12) composed of individual components; and
- a frame (14) having at least four vertical posts (26) and transverse struts (36), which is attached to the platform (12); wherein
- the platform (12) comprises four corner connectors (18) which are individual components of the platform (12) and on each of which is mounted a wheel (30);
**characterised in that**
- the vertical posts (26) are tubes and at least one transverse strut (36) is designed in such a way that the transverse strut (36) connects four vertical posts (26), wherein the four vertical posts (26) are in each case provided with a plurality of fastening holes (27), and locking pins (46, 48) of the transverse strut (36) are designed and arranged in such a way that, when the transverse strut (36) is attached, they engage in all four medical posts (26); and
- the at least one transverse strut (36) has one base section (40) and two arm sections (42) arranged substantially perpendicularly to the base section, and fastening projections (38) for accessories are provided on at least one of the arm sections (42) and/or the base section (40).

2. Trolley according to claim 1, **characterised in that** at least one corner connector (18) has a receptacle (24) for fastening a vertical post (26).

3. Trolley according to claim 1 or claim 2, **characterised in that** the corner connectors (18) are made of plastic.

4. Trolley according to any of the preceding claims, **characterised in that** the corner connectors (18) further have shock protection (28) made of resilient material.

5. Trolley according to any of the preceding claims, **characterised in that** the fastening projections are elongate hook-in straps (38).

6. Trolley according to any of the preceding claims, **characterised in that** the ends of the arm sections (42) remote from the base section (40) in each case have a first locking pin (46) which extends substantially perpendicularly to the longitudinal extent of the arm sections (42); and in the connecting regions between base section (40) and arm sections (42) are arranged second locking pins (48) which extend substantially perpendicularly to the longitudinal extent of the base section (40).

7. Trolley according to any of the preceding claims, further comprising tubular attachments (50) at the ends of both arm sections (42) remote from the base section (40), wherein the tubular attachments (50) are suitable for vertically inserting pivot pins of an accessory.

8. Trolley according to any of the preceding claims, further comprising panelling (58) made of a sheet material or board-like material (58a, 58b, 58c) which can be fixed between at least two of the four vertical posts (26) and defines a storage space between the vertical posts (26) on one or more sides.

9. Trolley according to any of the preceding claims, further comprising a lid (54; 54a, 54b) which closes the frame (14) on the side opposite the platform (12) and can be moved by means of a pivot mechanism from a closed position to an open position.

10. Trolley according to any of the preceding claims, **characterised in that** accessories can be attached to the frame, wherein the accessories comprise one or more elements selected from the group consisting of buckets (78), storage compartments (60, 64), receptacle elements (52) for mop holders, fastening elements (57) for tubular handles and clamping frames for plastic sacks.

11. Trolley according to any of the preceding claims, **characterised in that** a hand press (70; 80) for mops with integrated collecting receptacle for liquids can be attached to the frame.

12. Trolley according to any of the preceding claims, **characterised in that** a closable storage element (64) can be attached to the frame (14).

13. Trolley according to claim 12, **characterised in that** the closable storage element (64) comprises at least one pivotable door element in the open position of which the operator has access to storage compartments (66) which are arranged in the interior of the closable storage element (64) or on the inside of the at least one door.

## Revendications

1. Chariot de transport pour des ustensiles de nettoyage, comprenant :
- une plate-forme (12) constituée de composants individuels ; et
- un bâti (14) avec au moins quatre montants verticaux (26) et des traverses (36), lequel est fixé sur la plate-forme (12) ;
- la plate-forme (12) comportant quatre raccords d'angle (18) qui sont des composants individuels de la plate-forme (12) et contre chacun desquels est montée une roue (30) ;
**caractérisé en ce que**
- les montants verticaux (26) sont des tubes et **en ce qu'**au moins une traverse (36) est réalisée de telle manière que ladite traverse (36) relie quatre montants verticaux (26), lesdits quatre montants verticaux (26) présentant chacun une pluralité de trous de fixation (27) et des axes de blocage (46, 48) de la traverse (36) étant réalisés et disposés de manière à s'engager dans les quatre montants verticaux (26) lorsque la traverse (36) est fixée ; et
- **en ce que** la ou les traverses (36) présentent une segment de base (40) et deux segments latéraux (42) sensiblement perpendiculaires au segment de base, et **en ce que** des saillies de fixation (38) pour des pièces accessoires sont prévues sur au moins un des segments latéraux (42) et/ou sur le segment de base (40).

2. Chariot de transport selon la revendication 1,
**caractérisé en ce que**
au moins un raccord d'angle (18) présente un logement (24) pour la fixation d'un montant vertical (26).

3. Chariot de transport selon la revendication 1 ou la revendication 2,
**caractérisé en ce que**
les raccords d'angle (18) sont en matière synthétique.

4. Chariot de transport selon l'une des revendications précédentes,
**caractérisé en ce que**
les raccords d'angle (18) présentent en outre une protection anti-choc (28) en matériau élastique.

5. Chariot de transport selon l'une des revendications précédentes,
**caractérisé en ce que**
les saillies de fixation sont des pattes d'accrochage (38) oblongues.

6. Chariot de transport selon l'une des revendications précédentes,
**caractérisé en ce que**
les extrémités des segments latéraux (42) distantes du segment de base (40) présentent chacune un premier axe de blocage (46) qui s'étend sensiblement perpendiculairement à la longueur des segments latéraux (42) ; et **en ce que** des deuxièmes axes de blocage (48) sont disposés dans les zones de connexion entre le segment de base (40) et les segments latéraux (42), lesquels s'étendent sensiblement perpendiculairement à la longueur du segment de base (40).

7. Chariot de transport selon l'une des revendications précédentes, comprenant en outre des appendices tubulaires (50) sur des extrémités des deux segments latéraux (42) distantes du segment de base (40), lesdits appendices tubulaires (50) étant prévus pour une insertion verticale de pivots d'une pièce accessoire.

8. Chariot de transport selon l'une des revendications précédentes, comprenant en outre un habillage (58) en matériau en forme de feuilles ou de plaques (58a, 58b, 58c) pouvant être fixé entre au moins deux des quatre montants verticaux (26) et délimitant un espace de rangement sur un plusieurs côtés entre les montants verticaux (26).

9. Chariot de transport selon l'une des revendications précédentes, comprenant en outre un couvercle (54 ; 54a, 54b), terminant le bâti (14) du côté opposé à la plate-forme (12) et déplaçable d'une position de fermeture à une position d'ouverture au moyen d'un mécanisme pivotant.

10. Chariot de transport selon l'une des revendications précédentes,
**caractérisé en ce que**
des pièces accessoires peuvent être fixées sur le bâti, lesdites pièces accessoires comprenant un ou plusieurs éléments du groupe constitué de seaux (78), de casiers de rangement (60, 64), d'élément de réception (52) de supports pour serpillières, d'éléments de fixation (57) pour manches tubulaires et de cadres de serrage pour des sacs en matière plastique.

11. Chariot de transport selon l'une des revendications précédentes,
**caractérisé en ce que**
une presse à main (70 ; 80) pour serpillières à bac intégré pour les liquides peut être fixée contre le bâti.

12. Chariot de transport selon l'une des revendications précédentes,
**caractérisé en ce que**
un élément de rangement verrouillable (64) peut être fixé contre le bâti (14).

13. Chariot de transport selon la revendication 12, **caractérisé en ce que**
l'élément de rangement verrouillable (64) comprend au moins un élément de porte pivotant, dans la position d'ouverture duquel la personne opératrice a accès à des casiers de rangement (66) disposés à l'intérieur de l'élément de rangement verrouillable (64) ou contre la face interne de la ou des portes
